# EUROPEAN PATENT APPLICATION

(11) **EP 4 391 691 A1**
(43) Date of publication of application: **26.06.2024**
(21) Application number: 23203392.8
(22) Date of filing: 13.10.2023
(51) Int. Cl.: H04W 72/40, G01S 5/02, H04W 64/00, H04W 92/18

(54) **POSITIONING RESOURCE ALLOCATION**

(30) Priority: 22.12.2022 GB 202219557
(71) Applicant: Nokia Technologies Oy, 02610 Espoo (FI)
(72) Inventor: MICHALOPOULOS, Diomidis, 81541 Munich (DE); KUCERA, Stepan, 81541 Munich (DE); SAHIN, Taylan, 81739 Munich (DE); KESHAVAMURTHY, Prajwal, 81241 Munich (DE); WILDSCHEK, Torsten, Gloucester, GL4 5TW (GB)
(74) Representative: Nokia EPO representatives

(57) **Abstract**

Example embodiments may relate to an apparatus, method and/or computer program for sidelink positioning and resource allocation between devices. The method may comprise transmitting, from a first terminal device to a second terminal device, an indication that the second terminal device has been selected for involvement in a sidelink positioning session of the first terminal device. The method may also comprise receiving, at the first terminal device from the second terminal device, a first request for sidelink resource allocation to allow for performance of the sidelink positioning session by the second terminal device. The method may also comprise transmitting, from the first terminal to a network node, a second request for allocating sidelink resources to the second terminal device for performance of the sidelink positioning session by the second terminal device. The method may also comprise receiving, at the first terminal device from the network node, sidelink resource allocation information for performance of the sidelink positioning session by the second terminal device, and transmitting the sidelink resource allocation information from the first terminal device to the second terminal device.

## Description

### Field

Example embodiments relate to systems, methods and/or computer programs for positioning. In particular, example embodiments relate to sidelink positioning and resource allocation between devices.

### Background

Communication systems enable communication between two or more nodes or devices, such as fixed or mobile communication devices. Signals can be carried on wireless carriers.

An example of a cellular communication system is an architecture that is being standardized by the 3rd Generation Partnership Project (3GPP). There has been development in this field often referred to as the long-term evolution (LTE) of the Universal Mobile Telecommunications System (UMTS) radio-access technology. E-UTRA (evolved UMTS Terrestrial Radio Access) is the air interface of 3GPP's Long Term Evolution (LTE) upgrade path for mobile networks. In LTE, base stations, network nodes or access points, which are referred to as enhanced Node AP or Evolved Node B (eNBs), provide wireless access within a coverage area or cell. In LTE, mobile devices, or mobile stations are referred to as user equipments (UE). LTE has included a number of improvements or developments.

5G New Radio (NR) development is part of a continued mobile broadband evolution process to meet the requirements of 5G, similar to earlier evolution of 3G & 4G wireless networks. In addition, 5G is also targeted at the new emerging use cases in addition to mobile broadband. A goal of 5G is to provide significant improvement in wireless performance, which may include new levels of data rate, latency, reliability, and security. 5G NR may also scale to efficiently connect the massive Internet of Things (IoT), and may offer new types of mission-critical services. Ultra-reliable and low-latency communications (URLLC) devices may require high reliability and very low latency.

In a telecommunications network, the frameworks for downlink (i.e., signals are forwarded from a base station to a user equipment (UE)) and uplink transmissions (i.e., signals are forwarded from a UE to a base station) are widely deployed. In the context of these frameworks, physical signals transmitted from/to UEs are relayed by network base stations. In contrast, sidelink (SL) transmissions enable direct communications between two UEs without signal relay through a base station. Such transmissions may be used for, e.g., public safety, vehicle-to-everything (V2X) services, Proximity Services (ProSe), sidelink relaying services, device-to-device (D2D) communications, etc. Sidelink transmissions continue to be of interest in 3GPP New Radio (NR), enabling low latency, high reliability and high throughout services.

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, there is described a first terminal device comprising: means for transmitting, to a second terminal device, an indication that the second terminal device has been selected for involvement in a sidelink positioning session of the first terminal device. The first terminal device further comprises means for receiving, from the second terminal device, a first request for sidelink resource allocation to allow for performance of the sidelink positioning session by the second terminal device. The first terminal device further comprises means for transmitting, to a network node, a second request for allocating sidelink resources to the second terminal device for performance of the sidelink positioning session by the second terminal device. The first terminal device further comprises means for receiving, from the network node, sidelink resource allocation information for performance of the sidelink positioning session by the second terminal device; and means for transmitting the sidelink resource allocation information to the second terminal device.

The first request and the second request may comprise an identity of the second terminal device identifiable by a core network entity or by a radio access network, RAN, node.

The first terminal device may further comprise means for transmitting, to another second terminal device, an indication that the other second terminal device has been selected for involvement in a sidelink positioning session of the first terminal device; means for receiving, from the other second terminal device, another first request for sidelink resource allocation to allow for performance of the sidelink positioning session by the other second terminal device. The first terminal device may further comprise means for receiving, from the network node, further sidelink resource allocation information for performance of the sidelink positioning session by the other second terminal device; and means for transmitting the further sidelink resource allocation information to the other second terminal device. The second request may further comprise a request for allocating sidelink resources to the other second terminal device for performance of the sidelink positioning session by the other second terminal device.

The first terminal device may further comprise means for compiling the first request and the other first request to generate the second request.

The first terminal device may further comprise means for transmitting a discovery request message to search for a terminal device available for involvement in the sidelink positioning session of the first terminal device; means for receiving, from the second terminal device and in response to the discovery request message, an availability message indicative of an availability of the second terminal device to be involved in a sidelink positioning session of the first terminal device; and means for selecting the second terminal device for involvement in the sidelink positioning session of the first terminal device.

The second request may be transmitted in response to receipt of the first request.

The network node may be a core network entity hosting a location management function, LMF, or a radio access network, RAN, node.

The first terminal device may further comprise means for receiving, from the network node, an indication that the sidelink positioning session by the second terminal device has been allowed and means for transmitting, to the second terminal device, the indication.

The resource allocation information may be embedded in a container to be forwarded by the first terminal device to the second terminal device.

The first terminal device may further comprise means for processing the resource allocation information; and means for sending and/or receiving at least one sidelink positioning reference signal to and/or from the second terminal device based on the processing.

According to a second aspect, there is described a second terminal device comprising means for receiving, an indication that the second terminal device has been selected for involvement in a sidelink positioning session of a first terminal device. The second terminal device further comprises means for transmitting, to the first terminal device, a first request for sidelink resource allocation to allow for performance of the sidelink positioning session by the second terminal device and means for receiving sidelink resource allocation information from the first terminal device.

The first request may comprise an identity of the second terminal device identifiable by a core network entity or by a radio access network, RAN, node.

The second terminal device may further comprise means for receiving a discovery request message searching for a terminal device available for involvement in the sidelink positioning session of the first terminal device and means for transmitting, to the first terminal device, and in response to the discovery request message, an availability message indicative of an availability of the second terminal device to be involved in a sidelink positioning session of the first terminal device.

The second terminal device may further comprise means for receiving, from the first terminal device, an indication that the sidelink positioning session by the second terminal device has been allowed.

The second terminal device may further comprise means for processing the resource allocation information and means for sending and/or receiving at least one sidelink positioning reference signal to and/or from the first terminal device based on the processing.

The first terminal device may comprise at least one processor; and at least one memory storing instructions that, when executed by the at least processor, cause the performance of the apparatus.

The second terminal device may comprise at least one processor; and at least one memory storing instructions that, when executed by the at least processor, cause the performance of the apparatus.

According to a third aspect, there is described a method comprising: transmitting, from a first terminal device to a second terminal device, an indication that the second terminal device has been selected for involvement in a sidelink positioning session of the first terminal device; receiving, at the first terminal device from the second terminal device, a first request for sidelink resource allocation to allow for performance of the sidelink positioning session by the second terminal device; transmitting, from the first terminal device to a network node, a second request for allocating sidelink resources to the second terminal device for performance of the sidelink positioning session by the second terminal device; receiving, at the first terminal device from the network node, sidelink resource allocation information for performance of the sidelink positioning session by the second terminal device; and transmitting the sidelink resource allocation information from the first terminal device to the second terminal device.

According to a fourth aspect, there is described a method comprising: receiving, at a second terminal device from a first terminal device, an indication that the second terminal device has been selected for involvement in a sidelink positioning session of the first terminal device; transmitting, from the second terminal device to the first terminal device, a first request for sidelink resource allocation to allow for performance of the sidelink positioning session by the second terminal device; and receiving sidelink resource allocation information at the second terminal device from the first terminal device.

According to a fifth aspect, there is provided a computer program product comprising a set of instructions which, when executed on an apparatus, is configured to cause the apparatus to carry out the method of any preceding method definition.

According to a sixth aspect, there is provided a non-transitory computer readable medium comprising program instructions stored thereon for performing a method, comprising: transmitting, from a first terminal device to a second terminal device, an indication that the second terminal device has been selected for involvement in a sidelink positioning session of the first terminal device; receiving, at the first terminal device from the second terminal device, a first request for sidelink resource allocation to allow for performance of the sidelink positioning session by the second terminal device; transmitting, from the first terminal device to a network node, a second request for allocating sidelink resources to the second terminal device for performance of the sidelink positioning session by the second terminal device; receiving, at the first terminal device from the network node, sidelink resource allocation information for performance of the sidelink positioning session by the second terminal device; and transmitting the sidelink resource allocation information from the first terminal device to the second terminal device.

According to a sixth aspect, there is provided a non-transitory computer readable medium comprising program instructions stored thereon for performing a method, comprising: receiving, at a second terminal device from a first terminal device, an indication that the second terminal device has been selected for involvement in a sidelink positioning session of a first terminal device; transmitting, from the second terminal device to the first terminal device, a first request for sidelink resource allocation to allow for performance of the sidelink positioning session by the second terminal device; and receiving sidelink resource allocation information at the second terminal device from the first terminal device.

### Brief Description of the Drawings

Example embodiments will now be described by way of non-limiting example, with reference to the accompanying drawings, in which:
Fig. 1 shows, by way of example, a network architecture of a communication system;
Fig. 2 shows, by way of example, a network architecture of a sidelink positioning session;
Fig. 3 shows, by way of example, a flowchart of a method;
Fig. 4 shows, by way of example, a flowchart of a decision-making process; and
Fig. 5 shows, by way of example, a block diagram of an apparatus.

### Detailed Description

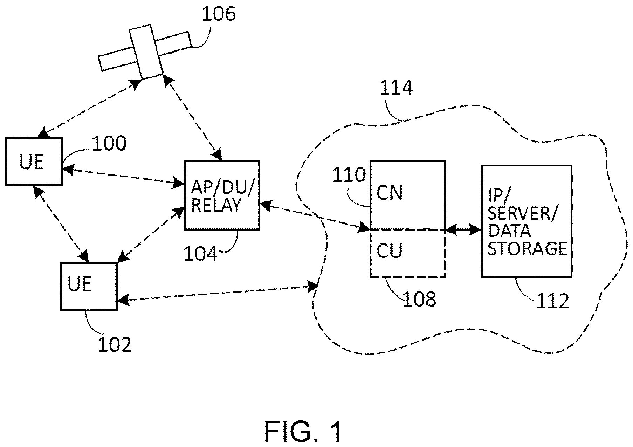

Figure 1 shows, by way of an example, a network architecture of a communication system which is a radio access network (RAN). In the following, different exemplifying embodiments will be described using, as an example of an access architecture to which embodiments may be applied, a radio access architecture based on long term evolution advanced (LTE Advanced, LTE-A) or new radio (NR), also known as fifth generation (5G), without restricting the embodiments to such an architecture, however. Embodiments may also be applied to other kinds of communications networks having suitable means by adjusting parameters and procedures appropriately. Some examples of other options for suitable systems are the universal mobile telecommunications system = radio access network, long term evolution (LTE), wireless local area network (WLAN or WiFi), worldwide interoperability for microwave access (WiMAX), Bluetooth^{®}, personal communications services (PCS), ZigBee^{®}, wideband code division multiple access (WCDMA), systems using ultra-wideband (UWB) technology, sensor networks, mobile ad-hoc networks (MANETs) and Internet Protocol multimedia subsystems (IMS) or any combination thereof.

Figure 1 shows first and second user devices 100, 102 configured to be in a wireless connection on one or more communication channels in a cell with a network node, such as a gNB 104 providing a cell. The physical link from a user device, e.g. the first user device 100, to the network node 104 is called the uplink (UL) or reverse link and the physical link from the network node to the user device is called the downlink (DL) or forward link. It should be appreciated that network nodes and their functionalities may be implemented by using any node, host, server or access point entity suitable for such a usage. A communications system typically comprises more than one network node in which case the network nodes may also be configured to communicate with one another over links, wired or wireless, designed for the purpose. These links may be used for signaling purposes. A network node is a computing device configured to control the radio resources of the communication system it is coupled to. The network node 104 may also be referred to as a radio access network (RAN) node, a transmission reception point (TRP), a base station (BS), an access point, an access node, or any other type of interfacing device including a relay station capable of operating in a wireless environment. A network node may include or is coupled to transceivers. From the transceivers of the network node 104, a connection may be provided to an antenna unit that establishes bi-directional radio links to user devices, such as the first and second user devices 100, 102. The antenna unit may comprise a plurality of antennas or antenna elements, for example arranged as an antenna array. The network node 104 may further be connected to a core network 110.

The user device, or user equipment UE, typically refers to a portable computing device that includes wireless mobile communication devices operating with or without a subscriber identification module (SIM), including, but not limited to, the following types of devices: a mobile station (mobile phone), smartphone, personal digital assistant, handset, device using a wireless modem (alarm or measurement device, etc.), laptop and/or touch screen computer, tablet, game console, notebook, a vehicle, fixed wireless access (FWA) and multimedia device. It should be appreciated that a user device may also be a nearly exclusive uplink only device, of which an example is a camera or video camera loading images or video clips to a network. A user device may also be a device having capability to operate in Internet of Things (IoT) network which is a scenario in which objects are provided with the ability to transfer data over a network without requiring human-to-human or human-to-computer interaction.

5G enables using multiple input and multiple output technology at both the UE and gNB side, many more base stations or nodes than the LTE. 5G mobile communications supports a wide range of use cases and related applications including video streaming, augmented reality, different ways of data sharing and various forms of machine type applications, including vehicular safety, different sensors and real-time control. 5G is expected to have multiple radio interfaces, namely below 7GHz, cmWave and mmWave, and also being integratable with existing legacy radio access technologies, such as the LTE. Below 7GHz frequency range may be called as FR1, and above 24GHz (or more exactly 24- 52.6 GHz) as FR2, respectively. Integration with the LTE may be implemented, at least in the early phase, as a system, where macro coverage is provided by the LTE and 5G radio interface access comes from small cells by aggregation to the LTE.

The communication system is also able to communicate with other networks, such as a public switched telephone network or the Internet 112, or utilize services provided by them. The communication network may also be able to support the usage of cloud services, for example at least part of core network operations may be carried out as a cloud service (this is depicted in Figure 1 by "cloud" 114). The communication system may also comprise a central control entity, or a like, providing facilities for networks of different operators to cooperate for example in spectrum sharing.

An edge cloud may be brought into RAN. Using an edge cloud may mean access node operations to be carried out, at least partly, in a server, host or node operationally coupled to a remote radio head or base station comprising radio parts. It is also possible that node operations will be distributed among a plurality of servers, nodes or hosts. Applications of cloud RAN architecture enables RAN real time functions being carried out at the RAN side (in a distributed unit, DU 104) and non-real time functions being carried out in a centralized manner (in a centralized unit, CU 108).

Sidelink communication may be understood as communication between terminal devices in which the terminal devices connect to each other directly without RAN involvement, in other words, without relaying the data via a network such as a cellular communication network. Such terminal devices may be of any suitable type such as mobile phones, vehicles, robots or wearable consumer electronic devices. Sidelink communication may be enabled by 5G and/or 4G technology. Sidelink communication may be beneficial for example to allow devices with close proximity to each other to discover and connect to each other at high data rates and low latency. This may be useful for example in peer-to-peer gaming, vehicle platooning, etc. Also enhanced augmented reality and/or virtual reality may benefit from sidelink communication.

In sidelink communication, resource allocations as well as link adaptation may be controlled by the terminal devices independently, which allows more control over usage of its resources to a terminal device. As sidelink communication allows reduction in latency due to being restricted to one hop, it may be useful for example in mission-critical industrial applications.

As described above, a terminal device participating in sidelink communication participates in managing its sidelink resource allocation and/or sidelink resource selection as well. Therefore, if a transmitter 'Tx' terminal device is to periodically transmit transmissions for a service to a receiver 'Rx' terminal device, traffic pattern and characteristics of the traffic are to be taken into account in periodic resource allocation or periodic resource selection. Examples of traffic pattern and characteristics comprise for example generation time of data, its periodicity, size and quality of service requirement. If the Rx terminal device receives from the Tx terminal device Sidelink Control Information (SCI) indicating and reserving future transmission resources, it is then aware of the transmissions that are to take place and may monitor resources correspondingly to be able to receive the transmissions from the Tx terminal device. Alternatively, the Rx terminal device may receive an indication indicative of one or more sidelink resources from the Tx terminal device and based on that indication, the Rx terminal device may reserve the one or more sidelink resources for future transmissions from the Tx terminal device.

It is to be noted that the future transmissions may be considered as subsequent or expected transmissions as well. The transmissions over the indicated/reserved resources may be used for periodic transmissions and/or re-transmissions. This allows the Rx terminal device to limit monitoring of sidelink transmissions to the resources indicated in the SCI which allows its power to be saved.

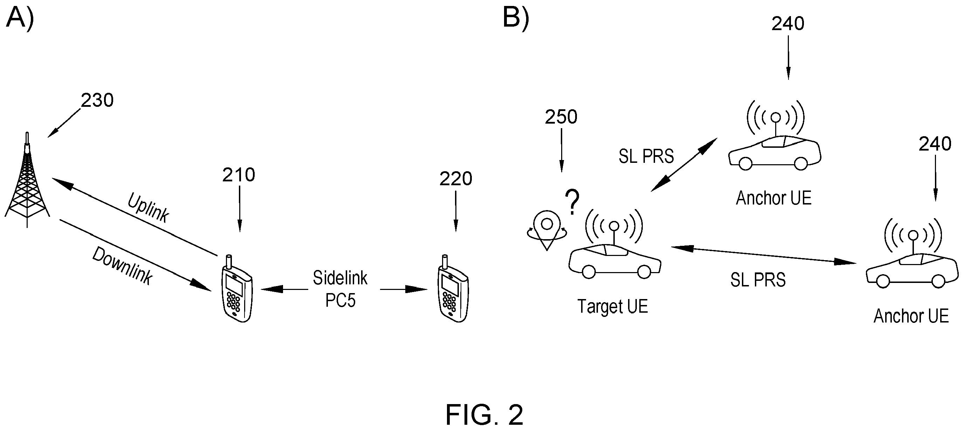

Figure 2A illustrates an exemplary embodiment of sidelink communication between terminal devices 210 and 220. In this exemplary embodiment the first terminal device 210 and second terminal device 220 are mobile phones, but other terminal devices and/or network infrastructures could also be used. In this exemplary embodiment the second terminal device 220 sends and receives sidelink transmissions of data from the first terminal device 210.

SL positioning is used to support use cases such as vehicle-to-everything (V2X), public safety, commercial and industrial-internet-of-things (IIoT). Typically, positioning requirements are captured via key-performance-indices such as:
- horizontal and vertical accuracy, where vertical accuracy refers to accuracy in altitude and determines the floor for indoor use cases and to distinguish between superposed tracks for road and rail use cases (e.g. bridges).
- positioning service availability: percentage value of the amount of time the positioning service is delivering the required position-related data within the performance requirements, divided by the amount of time the system is expected to deliver the positioning service according to the specification in the targeted service area.
- positioning service latency: time elapsed between the event that triggers the determination of the position-related data and the availability of the position-related data at the system interface.
- time to first fix (TTFF): time elapsed between the event triggering for the first time the determination of the position-related data and the availability of the position-related data at the positioning system interface.
- Update rate
- Energy consumption, etc.

The present disclosure aims to improve these key-performance-indices for SL positioning.

Figure 2B illustrates an exemplary embodiment of sidelink communication between anchor user equipment's (UE) 240 and target UE 250. A target UE 250 is a UE to be positioned. An anchor UE is a UE for supporting positioning of the target UE, e.g., by transmitting and/or receiving reference signals for positioning over SL interface. Figure 2B shows an example sidelink positioning session wherein two anchor UEs 240 are used to support the positioning of the target UE 250. The target UE 250 is the one that wants to know its own position, and the anchor UEs 240 are the UEs that participates in sidelink positioning and helps the target UE 250 to acquire its position e.g. by sending/receiving Sidelink Positioning Reference Signal (SL-PRS) and doing relevant measurements. The target and anchor UEs form a sort of sidelink positioning group and send/receive SL-PRS information to calculate the target UE 250 position based on UE measurement. This procedure is similar to UL/DL-based positioning, where gNBs serving as anchors transmit/receive reference signals to/from the target UEs 250 for positioning.

A target UE, such as the target UE 250, may herein be referred to interchangeably as 'a first terminal device'. An anchor UE, such as the anchor UE 240, may herein be referred to interchangeably as 'a second terminal device'.

A Sidelink Positioning Reference Signal (SL-PRS) refers to the reference signal transmitted over SL for positioning purposes. SL-PRS (pre-)configuration is a term used to collectively refer to (pre-)configured parameters of SL-PRS such as time-frequency resources including its bandwidth and periodicity; directivity-related parameters, e.g., beam direction, beam width, number of beams; and transmit power, etc. In coverage or partial coverage, the SL-PRS could be determined by network, e.g., by Location Management Function (LMF) or gNB, whereas when out-of-coverage the SL-PRS could be pre-configured and/or determined by UEs autonomously

Positioning may be determined in absolute or relative terms during the sidelink positioning session. Absolute positioning refers to an estimate of the UE position in 2D/3D geographic coordinates (e.g., latitude, longitude, elevation) within a coordinate system. Relative positioning refers to an estimate position relatively to other network elements or relatively to other UEs. Additionally, the sidelink positioning session can be used to determine ranging. Ranging is a determination of the distance between two UEs and/or the direction from one UE to another one via direct device connection.

SL positioning is based on the transmissions of SL-PRS by multiple anchor UEs to be received by a target UE (or SL-PRS exchange between the anchor and target UEs) to enable localization of the target UE within precise latency and accuracy requirements of the corresponding SL positioning session. Figure 2B illustrates a SL positioning scenario where a target UE is performing SL positioning session i.e., exchanging SL-PRS with two anchors UE in order to determine its location. Here, the anchor UEs are said to provide sidelink positioning assistance (incl. SL-PRS transmission and/or reception) to the target UE.

The disclosure herein relates to sidelink (SL) positioning under partial gNB coverage where either a target UE or at least one of SL positioning anchor UEs is out of direct gNB coverage. The term "partial coverage" is herein used to describe an environment wherein one of the following two UEs is out of direct gNB coverage:
- the target UE to be localized, or
- at least one of the identified anchor UEs assisting in the target UE positioning.

The relevant scenarios include standalone SL positioning over the PC5 interface, or hybrid positioning using both Uu and PC5 interface. The target UE calculates its own position by measuring positioning reference signals (SL-PRSs), which are emanated by other nearby UEs - so called anchor UEs, or by both anchor UEs and network elements (e.g., gNBs) in the case of hybrid positioning. Given the partial coverage condition, the allocation of SL-PRS resources used for target UE positioning is not trivially administered by the network since at least one anchor UE does NOT have a direct connection to the network and key decision-making entries (e.g. the LMF for sidelink positioning).

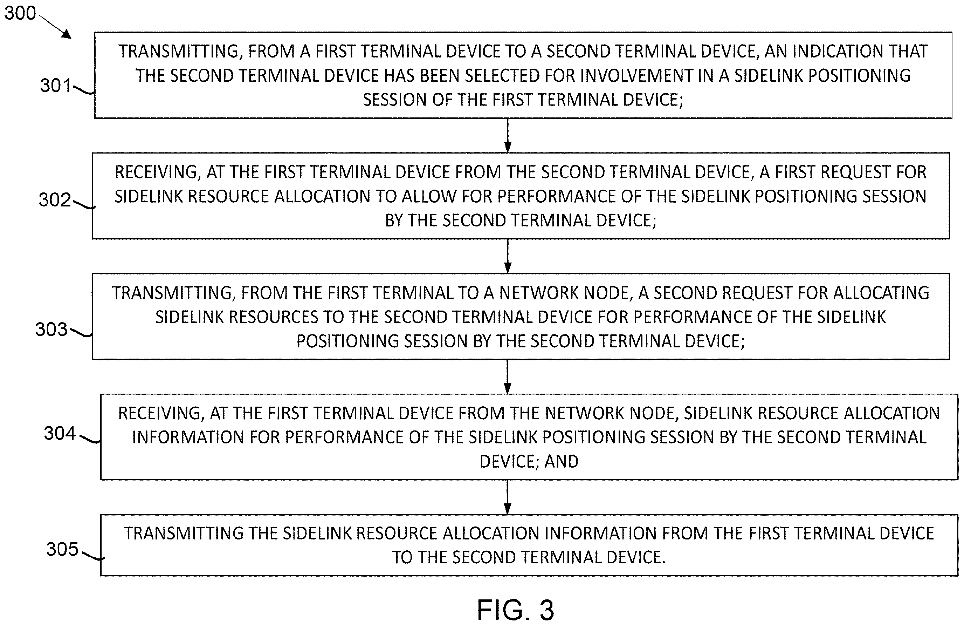

Figure 3 shows, by way of example, a flowchart of a method according to example embodiments. Each element of the flowchart may comprise one or more operations. The operations may be performed in hardware, software, firmware or a combination thereof. For example, the operations may be performed, individually or collectively, by a means, wherein the means may comprise at least one processor; and at least one memory storing instructions that, when executed by the at least one processor, cause the performance of the operations.

The method 300 may comprise a first operation 301 of transmitting, from a first terminal device to a second terminal device, an indication that the second terminal device has been selected for involvement in a sidelink positioning session of the first terminal device.

The method 300 may comprise a second operation 302 of receiving, at the first terminal device from the second terminal device, a first request for sidelink resource allocation to allow for performance of the sidelink positioning session by the second terminal device.

The method 300 may comprise a third operation 303 of transmitting, from the first terminal to a network node, a second request for allocating sidelink resources to the second terminal device for performance of the sidelink positioning session by the second terminal device.

The method 300 may comprise a fourth operation 304 of receiving, at the first terminal device from the network node, sidelink resource allocation information for performance of the sidelink positioning session by the second terminal device.

The method 300 may comprise a fifth operation 305 of transmitting, sidelink resource allocation information from the first terminal device to the second terminal device

The method may be performed by an apparatus (e.g. the first terminal device) such as the UE 100 of Figure 1, e.g., a mobile phone or a smart phone, or by a control device configured to control the functioning thereof, when installed therein. The UE 100 may be equipped with the antenna system. The antenna system may comprise an antenna array comprising a plurality of antenna elements or other known types of antenna. The antenna system may be configured to receive DL reference signals. Such antenna configurations can dynamically form and steer narrow transmission/reception beams, in a process known as beamforming. Active antenna configurations can be used both at the network nodes and at the UE 100 to further enhance the beamforming potential. More than one beam can be formed by each antenna array.

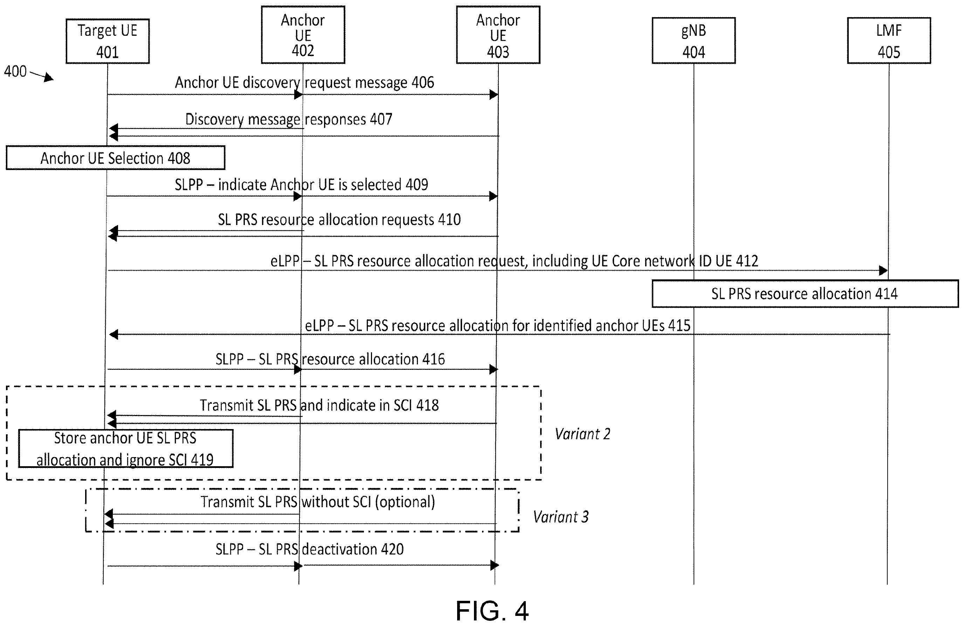

A procedure for allocating SL-PRS resources is illustrated in the flow-chart of Figure 4. Figure 4 shows, by way of example, a flow chart of a decision making process according to example embodiments. Each element of the flowchart may comprise one or more operations. The operations may be performed in hardware, software, firmware or a combination thereof. For example, the operations may be performed, individually or collectively, by a means, wherein the means may comprise at least one processor; and at least one memory storing instructions that, when executed by the at least one processor, cause the performance of the operations.

The process comprises an arrangement between a first terminal device 401 and at least one second terminal device 402, 403. The first terminal device 401, may, in one example, be the target device 250. The second terminal devices 402, 403, may, in one example, be the anchor devices 240.

The first step of the flow chart 400 comprises transmitting, from a first terminal device, 401, a discovery request (or discovery solicitation) message, 406, to scan for potentially available second terminal devices 402 and 403. The process may comprise receiving, at the second terminal devices 402, 403, the discovery request message 406. The process may comprise, the second terminal device 402, 403 transmitting, to the first terminal device 401, a discovery message response 407. The discovery message responses 407 may indicate an availability indication. For example, the availability indication may confer the second terminal device's 402, 403 availability to act as an anchor UE for the sidelink positioning session of the first terminal device 401. The availability indication may be based on resource allocation of the second terminal device 402, 403, and on the potentially availability to help with a new sidelink positioning session of the first terminal device 401.

The first terminal device 401, transmits a discovery request message 406 to search for a terminal device available for involvement in the sidelink positioning session of the first terminal device 401. The first terminal device 401 may also receive, from the second terminal device 402, 403, and in response to the discovery request message 406, an availability message (e.g., discovery message response 407) indicative of an availability of the second terminal device 402, 403 to be involved in a sidelink positioning session of the first terminal device 401. The first terminal device 401 may further select the second terminal devices 402, 403 for involvement in the sidelink positioning session of the first terminal device 401.

Similarly, the second terminal devices 402, 403 may receive and transmit information pertaining to the discovery request message 406. The second terminal devices 402, 403 may receive a discovery request message 406 searching for a terminal device available for involvement in the sidelink positioning session of the first terminal device 401. The second terminal device 402, 403 may also transmit, to the first terminal device 401, and in response to the discovery request message 406, an availability message (e.g., discovery message response 407) indicative of an availability of the second terminal device 402, 403 to be involved in a sidelink positioning session of the first terminal device 401.

Upon receiving a response to the discovery request message 406, the first terminal device 401 may perform an anchor selection based on, for example, the discovery response messages 407 from the second terminal devices 402, 403.

In an alternative embodiment, no discovery request message 406 or discovery response message 407 are required, and the first terminal device 401 may simply select 408 the second terminal devices 402, 403 as anchor UEs. This second terminal device selection 408 may, for example, be based on previously known information. For example, the first terminal device 401 may select the second terminal devices 402, 403 based on a previous sidelink positioning session that has recently taken place or ended.

The second terminal device selection 408 may be based on availability information provided in the availability indications or availability messages received from the second terminal devices 402, 403. The first terminal device 401 may compare data received from a plurality of potential second terminal devices in proximity to determine the most suitable second terminal devices 402, 403 from the plurality of potential second terminal devices. The first terminal device 401 may select the second terminal devices 402, 403 based on known information about the resource allocation of the second terminal devices 402, 403, and on the suitability for performing a sidelink positioning session based on the known resource allocation.

Once second terminal device selection 408 is complete, an indication 409 that the second terminal device has been selected for involvement in a sidelink positioning session is sent from the first terminal device 401 to the second terminal devices 402, 403. The first terminal device 401 may use Sidelink Positioning Protocol (SLPP), or any alike positioning protocol between devices, to indicate 409 to the chosen second terminal devices 402, 403 that they are selected as anchor UEs for its sidelink positioning session.

In a further embodiment, a first request 410 for resource allocation may be received from the second terminal device 402, 403 at the first terminal device 401. The first request 410 is for sidelink resource allocation to allow for performance of the sidelink positioning session by the second terminal device 402, 403. The first request 410 may further be issued based on the coverage condition of the second terminal devices 402, 403 (out of network coverage, in network coverage). For example, only the out-of-coverage anchor UEs among the selected anchor UEs may transmit a request for resource allocation to the target UE, or alternatively all selected anchor UEs may transmit a request for resource allocation to the target UE irrespective of their coverage condition.

A second request 412 for requesting allocation of sidelink resources to the second terminal device 402, 403 for performance of the sidelink positioning session by the second terminal device 402, 403 is sent from the first terminal device 401 to a network node 405. Presently, the network node 405 is a core network entity hosting a LMF. Alternatively, the network entity to which the second request 412 is sent may be a RAN node, e.g. the gNB 404 serving the first terminal device 401, for instance in case of a RAN-based location management component. The second request 412 may be issued by the first terminal device 401 on behalf of the second terminal device 402, 403. The second request 412 may be transmitted in response to the first request 410 being received at the first terminal device 401. The second request 412 may be transmitted after the first request 410 is received at the first terminal device 401.

The first request 410 from the second terminal device 402, 403 may contain the second terminal device's 402, 403 core network ID to be forwarded by the first terminal device 401 to the network node 405. More generally, the first request 410 may comprise an identity of the second terminal device 402, 403 identifiable by a core network entity (e.g., SUPI, IMSI, TMSI) or by a RAN node (e.g., C-RNTI, I-RNTI). The first request may be part of a Sidelink Positioning Protocol (SLPP) message, or could be delivered over unicast PC5-RRC. The second request 412 from the first terminal device 401 to the network node 405 may also contain the second terminal device's 402, 403 core network ID in order to complete the forwarding by the first terminal device 401 to the network node 405. More generally, the second request 412 may also comprise an identity of the second terminal device 402, 403 identifiable by a core network entity (e.g., SUPI, IMSI, TMSI) or by a RAN node (e.g., C-RNTI, I-RNTI). The second request 412 may be a message part of Sidelink Positioning Protocol (SLPP), or of LTE Positioning Protocol (LPP) extension to support sidelink positioning. The first request 410 and the second request 412 may contain the same information.

Optionally, the second request 412 message is sent to a central network node (typically this is the LMF, or alternatively this may be a RAN-based location management component). This can be directly as a message part of SLPP or extended LPP or from the serving gNB 404 to the RAN location management component.

Optionally, the first terminal device 401 may request the network node 405 to perform resource allocation 414 to allow for performance of the sidelink positioning session by the second terminal devices 402, 403. The network node 405 then proceeds to evaluate the resource allocation to determine possible allowance of the sidelink positioning session of the first terminal device 401 using the second terminal devices 402, 403.

Further optionally, the network node 405 selects the serving gNB 404 (or another neighboring gNB) and requests the gNB 404 to do resource allocation for the second terminal devices 402, 403. For example, the resource allocation may be conducted via new NR positioning protocol A (NRPPa).

Further optionally, the gNBs allocate the resources and respond to the network node 405 via NRPPa by informing about the resource allocation.

Further optionally, in case of RAN-based location management component receiving the second request 412, in case the second terminal devices 402, 403 are served or identified by the RAN node, the RAN node allocates the sidelink PRS resources to the second terminal devices 402, 403. In case the second terminal devices 402, 403 are not identified by the RAN node, the RAN node may forward the request to the LMF. The LMF may then proceed to conduct the resource allocation for the second terminal devices 402, 403.

In an example embodiment, the resource allocation information 414 is transmitted 415 from the network node 405 to the first terminal device 401. The resource allocation information 414 may comprise the time/frequency/code sidelink radio resources to be used for the sidelink positioning session of the first terminal device 401 by the second terminal devices 402, 403, and more specifically for scheduling the SL-PRS transmission. The first terminal device 401 may further received from the network node 405 an indication that resource allocation for the sidelink positioning session at the second terminal device 402, 403 has been allowed. The network node 404 may respond to the second request 412 from the first terminal device 401 with the indication, and may include the sidelink resource allocation information 414 for the so-identified second terminal devices 402, 403.

In a first variant, this resource allocation information 414 is not visible (i.e., transparent) to the first terminal device 401. The resource allocation information 414 may be provided as a container in a Sidelink Positioning Protocol (SLPP), without the first terminal device 401 processing the resource allocation information. In this first variant, the second terminal device 402, 403 obtains the resource allocation information 414, and indicates to the first terminal device 401 by means SCI, which sidelink resources are used for SL-PRS transmission. The first terminal device 401 then obtains, by reading the SCI of the second terminal devices 402, 403, the SL-PRS resource allocation information.

In a second variant, the resource allocation information 414 is visible to the first terminal device 401. In the second variant, the resource allocation information 414 may be readable by the first terminal device 401. For example, the resource allocation information 414 may be part of a Sidelink Positioning Protocol (SLPP) message. The first terminal device 401 may process the resource allocation information 414, and then respond to the second terminal devices 402, 403 providing the sidelink resource allocation information 414. The resource allocation information 414 may be processed at the first terminal device 401 where it is received, and then provided onwards to the second terminal devices 402, 403.

In the second variant, the first terminal device 401 may then store 419 the resource allocation information 414 of the second terminal devices 402, 403, so that it knows how to measure the SL-PRS that are transmitted by the second terminal devices 402, 403. The second terminal devices 402, 403 may transmit SL-PRS as indicated by the network (via the first terminal device 401). The second terminal devices 402, 403 may further transmit SCI for the SL-PRS transmission. In this instance, the first terminal device 401 may skip processing the SCI since the resource allocation information 414 was already obtained from the network.

In a third variant, the second terminal devices 402, 403 do not use SCI for indicating their transmitted SL-PRS, thus saving energy. In this case, the first terminal device 401 knows the SL-PRS transmission schedule from the resource allocation information 414 obtained from the network.

In all variants, the resource allocation information 414 is received 415 at the first terminal device 401 (whether visible or not) and is provided 416 to the second terminal devices 402, 403.

The first terminal device 401 may process the resource allocation information. Once the resource allocation has been processed, at least one SL-PRS can be sent and/or received to and/or from the second terminal device 402, 403 based on the processing.

The second terminal device 402, 403 processes the resource allocation information 414 comprising the indication that resource allocation for the sidelink positioning session of the first terminal device 401 at the second terminal device 402, 403 has been allowed. The second terminal devices 402, 403 initiate a sidelink positioning session, comprising means for sending at least one SL-PRS. At this stage the sidelink positioning session has successfully commenced. The second terminal device 402, 403 uses the indicated SL-PRS resources for SL-PRS transmission 418.

Optionally, the first terminal device 401 may transmit an indication 420 to the second terminal device 402, 403 that the sidelink positioning session is terminated once the necessary positioning session is complete. This is known as a deactivation signal.

The second terminal device 402, 403 receives an indication that it has been selected for involvement in a sidelink positioning session of the first terminal device 401. The second terminal device 402, 403 subsequently, transmits, to the first terminal device 401, the first request for sidelink resource allocation to allow for performance of the sidelink positioning session by the second terminal device 402, 403. The second terminal device 402, 403, receives the sidelink resource allocation information from the first terminal device 401. The second terminal device 402, 403 is not required to communicate directly with the network. The communication with the network is instead undertaken by and centralized through the first terminal device 401.

There may be multiple second terminal devices, such as terminal devices 402 and 403, all communicating with, and involved in the positioning of the first terminal device 401. In this case, the first terminal device 401 may aggregate or compile the first requests sent from the various second terminal devices before transmitting the second request to the network node 405. The second request would then include a single aggregated request for allocating sidelink resources to the various involved second terminal devices. In case of time-based positioning methods e.g. SL TDOA, at least three non-collinear second terminal devices (anchor UEs) are needed alongside the first terminal device (target UE) to achieve an accurate positioning estimate. In that case, there will be at least three second terminal devices with which first terminal device (target UE) interacts. Furthermore, for a higher the number of terminal devices used, a higher positioning accuracy is achieved.

The proposed system allows for improved resource co-ordination because the requests for SL-PRS resources from the second terminal devices 402, 403 goes via the first terminal device 401. In this way, the first terminal device 401 may collect, aggregate/compile the requests for sidelink resource allocation from the second terminal devices 402, 403, and forward them to the LMF, such that the LMF obtains these requests for sidelink resource allocation at once and in a coordinated manner. Additionally, by having all the resource allocation information forwarded through the first terminal device 401, then there is no need for SCI from the second terminal devices 402, 403 to the first terminal device 401, since the first terminal device 401 can get that information upfront from the network.

The proposed system allows for improved power saving. In a traditional system, the second terminal devices need to establish individual RRC connections to the network. The proposed system can thus save power by reducing the number of connections from/to the UEs to/from the network.

### Example Apparatus

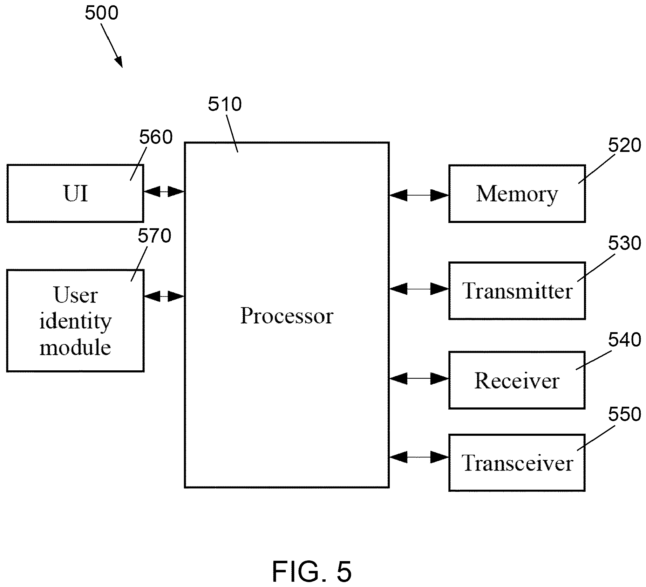

Figure 5 shows, by way of example, a block diagram of an apparatus capable of performing the method(s) as disclosed herein. Illustrated is device 500, which may comprise, for example, a mobile communication device such as mobile 100 of Figure 1. Comprised in device 500 is processor 510, which may comprise, for example, a single- or multi-core processor wherein a single-core processor comprises one processing core and a multi-core processor comprises more than one processing core. Processor 510 may comprise, in general, a control device. Processor 510 may comprise more than one processor. Processor 510 may be a control device. A processing core may comprise, for example, a Cortex-A8 processing core manufactured by ARM Holdings or a Steamroller processing core designed by Advanced Micro Devices Corporation. Processor 510 may comprise at least one Qualcomm Snapdragon and/or Intel Atom processor. Processor 510 may comprise at least one application-specific integrated circuit, ASIC. Processor 510 may comprise at least one field-programmable gate array, FPGA. Processor 510 may be means for performing method steps in device 500. Processor 510 may be configured, at least in part by computer instructions, to perform actions.

A processor may comprise circuitry, or be constituted as circuitry or circuitries, the circuitry or circuitries being configured to perform phases of methods in accordance with example embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analogue and/or digital hardware circuit(s) with software/firmware and (ii) any portions of hardware processor(s) with software (including digital signal processor(s)), software, and memory(ies) that work together to cause an apparatus, such as a mobile phone or a network node, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 500 may comprise memory 520. Memory 520 may comprise random-access memory and/or permanent memory. Memory 520 may comprise at least one RAM chip. Memory 520 may comprise solid-state, magnetic, optical and/or holographic memory, for example. Memory 520 may be at least in part accessible to processor 510. Memory 520 may be at least in part comprised in processor 510. Memory 520 may be means for storing information. Memory 520 may comprise computer instructions that processor 510 is configured to execute. When computer instructions configured to cause processor 510 to perform certain actions are stored in memory 520, and device 500 overall is configured to run under the direction of processor 510 using computer instructions from memory 520, processor 510 and/or its at least one processing core may be considered to be configured to perform said certain actions. Memory 520 may be at least in part external to device 500 but accessible to device 500.

Device 500 may comprise a transmitter 530. Device 500 may comprise a receiver 540. Transmitter 530 and receiver 540 may be configured to transmit and receive, respectively, information in accordance with at least one cellular or non-cellular standard. Transmitter 530 may comprise more than one transmitter. Receiver 540 may comprise more than one receiver. Transmitter 530 and/or receiver 540 may be configured to operate in accordance with global system for mobile communication, GSM, wideband code division multiple access, WCDMA, 5G, long term evolution, LTE, IS-95, wireless local area network, WLAN, Ethernet and/or worldwide interoperability for microwave access, WiMAX, standards, for example.

Device 500 may comprise a near-field communication, NFC, transceiver 550. NFC transceiver 550 may support at least one NFC technology, such as NFC, Bluetooth, Wibree or similar technologies.

Device 500 may comprise user interface, UI, 560. UI 560 may comprise at least one of a display, a keyboard, a touchscreen, a vibrator arranged to signal to a user by causing device 500 to vibrate, a speaker and a microphone. A user may be able to operate device 500 via UI 560, for example to accept incoming telephone calls, to originate telephone calls or video calls, to browse the Internet, to manage digital files stored in memory 520 or on a cloud accessible via transmitter 530 and receiver 540, or via NFC transceiver 550, and/or to play games.

Device 500 may comprise or be arranged to accept a user identity module 570. User identity module 570 may comprise, for example, a subscriber identity module, SIM, card installable in device 500. A user identity module 570 may comprise information identifying a subscription of a user of device 500. A user identity module 570 may comprise cryptographic information usable to verify the identity of a user of device 500 and/or to facilitate encryption of communicated information and billing of the user of device 500 for communication effected via device 500.

Processor 510 may be furnished with a transmitter arranged to output information from processor 510, via electrical leads internal to device 500, to other devices comprised in device 500. Such a transmitter may comprise a serial bus transmitter arranged to, for example, output information via at least one electrical lead to memory 520 for storage therein. Alternatively to a serial bus, the transmitter may comprise a parallel bus transmitter. Likewise processor 510 may comprise a receiver arranged to receive information in processor 510, via electrical leads internal to device 500, from other devices comprised in device 500. Such a receiver may comprise a serial bus receiver arranged to, for example, receive information via at least one electrical lead from receiver 540 for processing in processor 510. Alternatively to a serial bus, the receiver may comprise a parallel bus receiver.

Processor 510, memory 520, transmitter 530, receiver 540, NFC transceiver 550, UI 560 and/or user identity module 570 may be interconnected by electrical leads internal to device 500 in a multitude of different ways. For example, each of the aforementioned devices may be separately connected to a master bus internal to device 500, to allow for the devices to exchange information. However, as the skilled person will appreciate, this is only one example and depending on the embodiment various ways of interconnecting at least two of the aforementioned devices may be selected.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be embodied in the cloud.

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Some embodiments may be implemented in the cloud.

It is to be understood that what is described above is what is presently considered the preferred embodiments. However, it should be noted that the description of the preferred embodiments is given by way of example only and that various modifications may be made without departing from the scope as defined by the appended claims.

## Claims

1. A first terminal device, comprising:
means for transmitting, to a second terminal device, an indication that the second terminal device has been selected for involvement in a sidelink positioning session of the first terminal device;
means for receiving, from the second terminal device, a first request for sidelink resource allocation to allow for performance of the sidelink positioning session by the second terminal device;
means for transmitting, to a network node, a second request for allocating sidelink resources to the second terminal device for performance of the sidelink positioning session by the second terminal device;
means for receiving, from the network node, sidelink resource allocation information for performance of the sidelink positioning session by the second terminal device; and
means for transmitting the sidelink resource allocation information to the second terminal device.

2. The first terminal device of claim 1 wherein the first request and the second request comprises an identity of the second terminal device identifiable by a core network entity or by a radio access network, RAN, node.

3. The first terminal device of any preceding claim, further comprising:
means for transmitting, to another second terminal device, an indication that the other second terminal device has been selected for involvement in a sidelink positioning session of the first terminal device;
means for receiving, from the other second terminal device, another first request for sidelink resource allocation to allow for performance of the sidelink positioning session by the other second terminal device; and
means for receiving, from the network node, further sidelink resource allocation information for performance of the sidelink positioning session by the other second terminal device; and
means for transmitting the further sidelink resource allocation information to the other second terminal device; and
wherein the second request further comprises a request for allocating sidelink resources to the other second terminal device for performance of the sidelink positioning session by the other second terminal device.

4. The first terminal device of claim 3, further comprises:
means for compiling the first request and the other first request to generate the second request.

5. The first terminal device of any preceding claim, further comprising:
means for transmitting a discovery request message to search for a terminal device available for involvement in the sidelink positioning session of the first terminal device;
means for receiving, from the second terminal device and in response to the discovery request message, an availability message indicative of an availability of the second terminal device to be involved in a sidelink positioning session of the first terminal device;
means for selecting the second terminal device for involvement in the sidelink positioning session of the first terminal device.

6. The first terminal device of any preceding claim, wherein the second request is transmitted in response to receipt of the first request.

7. The first terminal device of any preceding claim, wherein the network node is a core network entity hosting a location management function, LMF, or a radio access network, RAN, node.

8. The first terminal device of any preceding claim, further comprising:
means for receiving, from the network node, an indication that the sidelink positioning session by the second terminal device has been allowed;
means for transmitting, to the second terminal device, the indication.

9. The first terminal device of any preceding claim, wherein the resource allocation information are embedded in a container to be forwarded by the first terminal device to the second terminal device.

10. The first terminal device of any preceding claim, further comprising:
means for processing the resource allocation information;
means for sending and/or receiving at least one sidelink positioning reference signal to and/or from the second terminal device based on the processing.

11. A second terminal device, comprising:
means for receiving, an indication that the second terminal device has been selected for involvement in a sidelink positioning session of a first terminal device;
means for transmitting, to the first terminal device, a first request for sidelink resource allocation to allow for performance of the sidelink positioning session by the second terminal device;
means for receiving sidelink resource allocation information from the first terminal device.

12. The second terminal device of claim 11, wherein the first request comprises an identity of the second terminal device identifiable by a core network entity or by a radio access network, RAN, node.

13. The second terminal device of any of claims 11 to 12, further comprising:
means for receiving a discovery request message searching for a terminal device available for involvement in the sidelink positioning session of the first terminal device;
means for transmitting, to the first terminal device, and in response to the discovery request message, an availability message indicative of an availability of the second terminal device to be involved in a sidelink positioning session of the first terminal device.

14. The second terminal device of any of claims 11 to 13, further comprising:
means for receiving, from the first terminal device, an indication that the sidelink positioning session by the second terminal device has been allowed.

15. The second terminal device of any of claims 11 to 14, further comprising:
means for processing the resource allocation information;
means for sending and/or receiving at least one sidelink positioning reference signal to and/or from the first terminal device based on the processing.

16. The second terminal device of any of claims 11 to 15, wherein the first terminal device comprises the first terminal device of any of claims 1 to 10.

17. The first terminal device of any of claims 1 to 10 or the second device of any of claims 11 to 16, wherein the means comprise: at least one processor; and at least one memory storing instructions that, when executed by the at least processor, cause the performance of the apparatus.

18. A method comprising:
transmitting, from a first terminal device to a second terminal device, an indication that the second terminal device has been selected for involvement in a sidelink positioning session of the first terminal device;
receiving, at the first terminal device from the second terminal device, a first request for sidelink resource allocation to allow for performance of the sidelink positioning session by the second terminal device;
transmitting, from the first terminal device to a network node, a second request for allocating sidelink resources to the second terminal device for performance of the sidelink positioning session by the second terminal device;
receiving, at the first terminal device from the network node, sidelink resource allocation information for performance of the sidelink positioning session by the second terminal device; and
transmitting the sidelink resource allocation information from the first terminal device to the second terminal device.

19. A method comprising:
receiving, at a second terminal device from a first terminal device, an indication that the second terminal device has been selected for involvement in a sidelink positioning session of the first terminal device;
transmitting, from the second terminal device to the first terminal device, a first request for sidelink resource allocation to allow for performance of the sidelink positioning session by the second terminal device; and
receiving sidelink resource allocation information at the second terminal device from the first terminal device.
